# EUROPÄISCHE PATENTSCHRIFT

(11) **EP 2 817 872 B1**
(45) Veröffentlichungstag und Bekanntmachung des Hinweises auf die Patenterteilung: **15.12.2021**
(21) Anmeldenummer: 12717080.1
(22) Anmeldetag: 16.04.2012
(51) Int. Cl.: H02M 1/34, H02M 7/48, H02M 7/483

(54) **SUBMODUL FÜR EINEN MODULAREN MEHRSTUFENUMRICHTER MIT BESCHALTUNGSNETZWERK**
SUBMODULE FOR A MODULAR MULTILEVEL CONVERTER WITH A SNUBBER NETWORK
SOUS-MODULE POUR CONVERTISSEUR MULTINIVEAU MODULAIRE AVEC RÉSEAU D'AMORTISSEMENT

(43) Veröffentlichungstag der Anmeldung: 31.12.2014
(73) Patentinhaber: Siemens Energy Global GmbH & Co. KG, 81739 München (DE)
(72) Erfinder: MARQUARDT, Rainer, 85521 Ottobrunn/Riemerling (DE); GAMBACH, Herbert, 91080 Uttenreuth (DE)
(86) Internationale Anmeldenummer: PCT/EP2012/056865
(87) Internationale Veröffentlichungsnummer: WO 2013/156050

(56) Entgegenhaltungen:
- EP-A2- 0 819 563
- DE-A1-102009 057 288
- None

## Beschreibung

Die Erfindung betrifft ein Submodul für einen modularen Mehrpunktumrichter mit einem Energiespeicher, einer parallel zum Energiespeicher geschalteten Halbleiterreihenschaltung aus zwei ein- und abschaltbaren Leistungshalbleiterschaltern, denen jeweils eine Freilaufdiode gegensinnig parallel geschaltet ist, einer ersten Anschlussklemme, die mit dem Potenzialpunkt zwischen den Leistungshalbleiterschaltern verbunden ist, einer zweiten Anschlussklemme und einem Beschaltungsnetzwerk, das eine Stromanstiegsbegrenzungsdrossel und einen diese überbrückenden Entmagnetisierungszweig aufweist, in dem zwei in Reihe angeordnete gleichsinnige Beschaltungsdioden und ein Beschaltungswiderstand angeordnet sind, wobei die Halbleiterreihenschaltung über die Stromanstiegsbegrenzungsdrossel mit dem Energiespeicher verbunden ist und wobei der Potenzialpunkt zwischen den Beschaltungsdioden über einen Beschaltungskondensator mit dem Potentialpunkt zwischen den Leistungshalbleiterschaltern verbunden ist.

Ein solches Submodul ist aus der EP 0 819 563 A2 bereits bekannt. Dort ist ein Umrichter für die Antriebstechnik offenbart, der aus zwei Teilstromrichtern besteht. Jeder Teilumrichter weist einen Zwischenkreiskondensator und eine diesem parallel geschaltete Halbleiterreihenschaltung aus zwei gleichsinnig in Reihe geschalteten Leistungshalbleiterschaltern auf. In einer der Stromschienen zwischen dem Zwischenkreiskondensator und der Halbleiterreihenschaltung ist eine Stromanstiegsbegrenzungsdrossel abgeordnet, die von einem Entmagnetisierungszweig überbrückt ist. Der Entmagnetisierungszweig ist mit zwei gleichsinnig orientierten Beschaltungsdioden sowie einem Beschaltungswiderstand ausgerüstet und bildet mit dem von ihm überbrückten Abschnitt der Stromschiene eine Freilaufmasche aus, die zum Abbau einer in der Stromanstiegsbegrenzungsdrossel gespeicherten Energie dient. Der Potenzialpunkt zwischen den Beschaltungsdioden des Entmagnetisierungszweiges ist über einen Beschaltungskondensator mit dem Potenzialpunkt zwischen den Leistungshalbleiterschaltern verbunden. Der Entmagnetisierungszweig weist ferner einen äußeren Verzweigungspunkt oder mit anderen Worten einen Knoten auf, an dem dieser mit einem Überspannungskondensator verbunden ist. Der Überspannungskondensator ist zusammen mit dem Beschaltungswiderstand des Entmagnetisierungszweiges dem Zwischenkreiskondensator parallel geschaltet und dient zur Spannungsbegrenzung der Leistungshalbleiterschalter. Da der Beschaltungswiderstand Teil des Entmagnetisierungszweiges ist, ist dieser in seiner Auslegung begrenzt. Aus diesem Grunde muss der Überspannungskondensator nahezu die gleiche Spannung wie der Zwischenkreiskondensator aufnehmen. Dies führt jedoch zu einem raumgreifenden und kostenintensiven Überspannungskondensator.

Aufgabe der Erfindung ist es, ein Submodul der eingangs genannten Art bereitzustellen, das einen sicheren Betrieb mit möglichst geringen Verlusten ermöglicht und das kostengünstig ist.

Diese Aufgabe wird erfindungsgemäß gelöst durch ein Submodul nach dem unabhängigen Patentanspruch.

Bei diesem Submodul weist das Beschaltungsnetzwerk keine weiteren Beschaltungsbauteile auf oder jedes weitere Beschaltungsbauteil des Beschaltungsnetzwerks ist in einer Masche angeordnet, die teilweise aus dem Entmagnetisierungszweig oder Abschnitten von diesem gebildet ist.

Erfindungsgemäß weist jeder Entmagnetisierungszweig des Submoduls, abgesehen von Verzweigungspunkten zu inneren Maschen keine weiteren Knoten oder mit anderen Worten Verzweigungspunkte auf. Lediglich die Verbindungen zur Stromschiene, welche den Energiespeicher mit der Halbleiterreihenschaltung verbindet, sind im Rahmen der Erfindung zulässig. Mit anderen Worten weist im Rahmen der Erfindung das Beschaltungsnetzwerk neben Komponenten, die im Entmagnetisierungszweig selbst oder in einer von diesem gebildeten Masche angeordnet sind, und dem Beschaltungskondensator, der den Potenzialpunkt zwischen den ein- und abschaltbaren Leistungshalbleiterschaltern mit dem Potenzialpunkt zwischen den Beschaltungsdioden des Entmagnetisierungszweiges verbindet, keine weiteren Beschaltungsbauteile wie Beschaltungsdioden, Beschaltungskondensatoren und/oder Beschaltungswiderstände auf. Insbesondere ist ein Beschaltungskondensator, der dem Energiespeicher parallel geschaltet ist und daher eine ähnlich hohe Spannung aufnehmen muss, im Rahmen der Erfindung vermieden. Im Rahmen der Erfindung bewirken der Beschaltungskondensator zwischen Entmagnetisierungszweig und Halbleiterreihenschaltung sowie der Beschaltungswiderstand des Entmagnetisierungszweigs allein eine ausreichend gute Spannungsbegrenzung für die Halbleiterreihenschaltung, die dem Entmagnetisierungszweig über den Beschaltungskondensator jeweils zugeordnet ist. Zu den genannten Bauteilen des Beschaltungsnetzwerks können im Rahmen der Erfindung lediglich Bauteile hinzutreten, die im Entmagnetisierungszweig selbst oder in einer Masche angeordnet sind, die von dem gesamten oder einem Abschnitt des Entmagnetisierungszweiges mit ausgebildet sind. Das erfindungsgemäße Submodul weist daher ein Beschaltungsnetzwerk auf, das kompakt und kostengünstig ist. Es verursacht darüber hinaus geringe Energieverluste während des Betriebs.

Das erfindungsgemäße Submodul eignet sich insbesondere für modulare Mehrpunktumrichter für sehr hohe Spannungen und Leistungen. Anwendungsfelder sind beispielsweise die Hochspannungsgleichstromübertragung und Großantriebe. Durch den modularen Aufbau ist der Mehrpunktumrichter gut skalierbar und kann auf einfache Art und Weise den verschiedenen Anforderungen angepasst werden. Die Submodule enthalten neben ein- und abschaltbaren Leistungshalbleiterschaltern, wie beispielsweise IGBTs, IGCTs, GTOs oder dergleichen, einen Energiespeicher, wie beispielsweise einen Speicherkondensator. Der erzielbare Wirkungsgrad und die technisch wirtschaftlich erreichbaren Leistungen sind hier von besonderer Bedeutung. Die während des Betriebs sich einstellenden Verluste können in statische Verluste und dynamische Verluste unterteilt werden, wobei sich die dynamischen Verluste aufgrund des Ein- und Abschaltens der Leistungshalbleiterschalter ergeben. Die besagten Verluste stellen sich jedoch auch an den parallelen Dioden ein. Das erfindungsgemäße Submodul weist aufgrund seines Beschaltungsnetzwerks einen hohen Wirkungsgrad und somit geringe Verluste auf. Darüber hinaus können erfindungsgemäß Leistungshalbleiterschalter eingesetzt werden, die zum Schalten höherer Spannungen eingerichtet sind. Solche Leistungshalbleiter wären ansonsten aufgrund zu hoher dynamischer Verluste nicht einsetzbar. Folglich lassen sich mit dem erfindungsgemäßen Submodul Umrichter mit höherer Leistung und verbessertem Wirkungsgrad herstellen, da die geforderte Leistung und Spannung des Umrichters mit einer verminderten Anzahl von Submodulen bereitgestellt werden kann.

Erfindungsgemäß kann der Beschaltungskondensator im Vergleich zum Beschaltungskondensator des oben genannten Standes der Technik sehr klein ausgelegt werden, da dieser nur für die vergleichsweise geringe Schaltüberspannung bemessen werden muss. Die Freilaufdioden werden im Rahmen der Erfindung so ausgelegt, dass diese sehr verlustarm sind und einen harten, also schnellen, Stromabschnitt bereitstellen. Es ergibt sich somit eine herabgesetzte Abschaltverlustenergie der Freilaufdioden. Ferner weisen die ein- und abschaltbaren Leistungshalbleiterschalter eine wesentlich erhöhte Abschaltstromgrenze auf. Durch die Herabsetzung der Verluste der ein- und abschaltbaren Leistungshalbleiterschalter und die Einsatzmöglichkeit verlustarmer Freilaufdioden ist eine wesentliche Leistungssteigerung durch das erfindungsgemäße Submodul ermöglicht.

Vorteilhafterweise bildet das erfindungsgemäße Submodul eine Halbbrückenschaltung aus. Eine Halbbrückenschaltung ist dem Fachmann bekannt. Bei einer Halbbrückenschaltung weist das Submodul einen einzigen Energiespeicher mit zwei Polen auf. Einer der Pole des Energiespeichers ist über einen Leistungshalbleiterschalter mit der ersten Anschlussklemme verbindbar. Die zweite Anschlussklemme ist entweder niederinduktiv und somit direkt oder über die Stromanstiegsbegrenzungsdrossel mit dem anderen Pol des Energiespeichers verbunden. Bei Ausbildung einer Mittenanzapfung der Stromanstiegsbegrenzungsdrossel ist die zweite Anschlussklemme über einen Abschnitt der Stromanstiegsbegrenzungsdrossel mit dem besagten Pol verbunden. Auf diese Weise kann je nach Ansteuerung der ein- und abschaltbaren Leistungshalbleiterschalter, beispielsweise IGCTs, entweder die am Energiespeicher abfallende Spannung oder aber eine Nullspannung zwischen der ersten Anschlussklemme und der zweiten Anschlussklemme erzeugt werden. Besondere Vorteile ergeben sich, wenn die zweite Anschlussklemme niederinduktiv mit der Halbleiterreihenschaltung verbunden und die Stromanstiegsbegrenzungsdrossel des Beschaltungsnetzwerks zwischen der zweiten Anschlussklemme und dem Energiespeicher angeordnet ist. Bei dieser Ausgestaltung der Erfindung fließt der Laststrom oder aber bei HGÜ-Anwendungen der Gleichstromanteil nicht mehr über die Stromanstiegsbegrenzungsdrossel. Diese kann dementsprechend kleiner und somit verlustärmer und kostengünstiger ausgeführt sein.

Bei einer hiervon abweichenden Variante ist das Submodul als Vollbrückenschaltung ausgebildet, die eine parallel zu dem Energiespeicher angeordnete zweite Halbleiterreihenschaltung aus zwei ein- und abschaltbaren Leistungshalbleiterschaltern aufweist, denen jeweils eine Freilaufdiode gegensinnig parallel geschaltet ist, wobei die zweite Anschlussklemme mit dem Potenzialpunkt zwischen den Leistungshalbleiterschaltern der zweiten Reihenschaltung verbunden ist. Die oder eine zweite Stromanstiegsbegrenzungsdrossel ist von einem zweiten Entmagnetisierungszweig überbrückt, in dem zwei in Reihe angeordnete gleichsinnige Beschaltungsdioden und ein Beschaltungswiderstand angeordnet sind. Der Potenzialpunkt zwischen den Beschaltungsdioden des zweiten Entmagnetisierungszweigs ist über einen zweiten Beschaltungskondensator mit dem Potenzialpunkt zwischen den Leistungshalbleiterschaltern der zweiten Halbleiterreihenschaltung verbunden. Auch die Vollbrückenschaltung ist dem Fachmann bekannt. Eine Vollbrücke verfügt über zwei Halbleiterreihenschaltungen aus jeweils zwei ein- und abschaltbaren Leistungshalbleiterschaltern, wobei der Potenzialpunkt zwischen den Leistungshalbleiterschaltern jeweils mit einer äußeren Anschlussklemme verbunden ist. Jede Halbleiterreihenschaltung ist dem einzigen beispielsweise kapazitiven Energiespeicher parallel geschaltet. Zwischen den Anschlussklemmen kann nun je nach Ansteuerung der Leistungshalbleiterschalter entweder die an dem Energiespeicher abfallende Spannung, eine Nullspannung oder aber die inverse Energiespeicherspannung erzeugt werden. Bei dieser Ausgestaltung des erfindungsgemäßen Submoduls kann das Submodul lediglich eine einzige Stromanstiegsbegrenzungsdrossel aufweisen. Die eine Stromanstiegsbegrenzungsdrossel wird dann von zwei Entmagnetisierungszweigen überbrückt, die jeweils über einen zugeordneten Beschaltungskondensator mit dem Potenzialpunkt zwischen den Leistungshalbleiterschaltern der jeweiligen Halbleiterschaltung verbunden sind. Bei dieser Ausgestaltung der Vollbrückenschaltung können jedoch die Leistungshalbleiterschalter der ersten Halbleiterreihenschaltung nicht gleichzeitig zu den Leistungshalbleiterschaltern der zweiten Halbleiterreihenschaltung angesteuert werden, da zuvor die Entmagnetisierung der einzigen Stromanstiegsbegrenzungsdrossel abgewartet werden muss. Aus diesem Grunde ist eine Vollbrückenschaltung mit nur einer einzigen Entmagnetisierungsdrossel nur für bestimmte Anforderungen geeignet.

Abweichend hiervon weist die Vollbrückenschaltung jedoch zwei Stromanstiegsbegrenzungsdrosseln auf. Jede Stromanstiegsbegrenzungsdrossel ist von einem zugeordneten Entmagnetisierungszweig überbrückt, wobei der eine Entmagnetisierungszweig über den zugeordneten Beschaltungskondensator mit der einen Halbleiterreihenschaltung und der andere Entmagnetisierungszweig über den zweiten Beschaltungskondensator mit der anderen zweiten Halbleiterreihenschaltung verbunden ist. Jeder Entmagnetisierungszweig und jeder Beschaltungskondensator ist also einer Halbleiterreihenschaltung zugeordnet. Gemäß dieser Ausgestaltung der Erfindung können die Leistungshalbleiterschalter der Vollbrückenschaltung unabhängig voneinander und beispielsweise auch gleichzeitig angesteuert werden, ohne dass dies zu unerlaubten Stromanstiegen führen würde.

Bei einer weiteren Variante weist das erfindungsgemäße Submodul eine erste Untereinheit und eine zweite Untereinheit auf, wobei die erste und die zweite Untereinheit beide als Halbbrückenschaltungen realisiert sind. Die erste Untereinheit weist daher einen ersten Energiespeicher, eine erste Halbleiterschaltung mit zwei in Reihe geschalteten ein- und abschaltbaren Leistungshalbleiterschaltern mit jeweils gegensinniger Freilaufdiode auf. Ferner ist eine erste Anschlussklemme vorgesehen, die mit dem Potenzialpunkt zwischen den Leistungshalbleiterschaltern verbunden ist. Auch ist eine erste Stromanstiegsbegrenzungsdrossel vorgesehen, die in der Verschienung zwischen Energiespeicher und Halbleiterschaltung angeordnet ist. Die erste Stromanstiegsbegrenzungsdrossel wird von einem ersten Entmagnetisierungszweig überbrückt, der wieder einen Beschaltungswiderstand sowie zwei gleichsinnig angeordnete Beschaltungsdioden aufweist, wobei der Potenzialpunkt zwischen den Beschaltungsdioden über einen ersten Beschaltungskondensator mit dem Potenzialpunkt zwischen den Leistungshalbleiterschaltern der ersten Halbleiterreihenschaltung verbunden ist. Ferner ist eine zweite Untereinheit vorgesehen, die einen zweiten Energiespeicher, eine parallel zu diesem angeordnete zweite Halbleiterreihenschaltung aus zwei ein- und abschaltbaren Leistungshalbleiterschaltern, denen jeweils eine Freilaufdiode gegensinnig parallel geschaltet ist, wobei die zweite Anschlussklemme mit dem Potenzialpunkt zwischen den Leistungshalbleiterschaltern der zweiten Halbleiterreihenschaltung verbunden ist. Die zweite Untereinheit verfügt über eine zweite Stromanstiegsbegrenzungsdrossel sowie über einen die zweite Stromanstiegsbegrenzungsdrossel überbrückenden Entmagnetisierungszweig. In dem zweiten Entmagnetisierungszweig sind wieder zwei in Reihe angeordnete gleichsinnige Beschaltungsdioden und ein Beschaltungswiderstand angeordnet. Jede Halbleiterreihenschaltung ist über jeweils eine Stromanstiegsbegrenzungsdrossel mit dem jeweils zugeordneten Energiespeicher verbunden. Mit anderen Worten ist die erste Halbleiterreihenschaltung über die erste Stromanstiegsbegrenzungsdrossel mit dem ersten Energiespeicher und die zweite Halbleiterreihenschaltung über die zweite Stromanstiegsbegrenzungsdrossel mit dem zweiten Energiespeicher verbunden. Der Potenzialpunkt zwischen den Beschaltungsdioden des zweiten Entmagnetisierungszweigs ist über den zweiten Beschaltungskondensator mit dem Potenzialpunkt zwischen den Leistungshalbleiterschaltern der zweiten Halbleiterschaltung verbunden. Zwischen der ersten Untereinheit und der zweiten Untereinheit sind Verbindungsmittel angeordnet, so dass die Untereinheiten miteinander verbunden werden können beziehungsweise sind. Die Verbindungsmittel weisen eine Schalteinheit und Potenzialtrennungsdioden auf. Die Schalteinheit kann mittels eines Überbrückungszweigs überbrückt sein, in dem ein Dämpfungswiderstand angeordnet ist. Der Dämpfungswiderstand ist Teil des Beschaltungsnetzwerks des erfindungsgemäßen Submoduls.

Gemäß einer diesbezüglich zweckmäßigen Ausgestaltung weist jeder Überbrückungszweig einen dritten Beschaltungskondensator auf. Der dritte Beschaltungskondensator ist in Reihenschaltung zum Dämpfungswiderstand angeordnet. Darüber hinaus ist es bei einer Variante der Erfindung auch möglich, dass im Überbrückungszweig eine Beschaltungsdiode in Reihe zum Dämpfungswiderstand gegebenenfalls zum Beschaltungskondensator angeordnet ist. Die Beschaltungsdiode ist parallel zur Schalteinheit angeordnet und weist, wenn die Schalteinheit ein Leistungshalbleiterschalter ist, die gleiche Durchlassrichtung auf wie der besagte Leistungshalbleiterschalter.

Die Schalteinheit ist vorzugsweise ein ein- und abschaltbarer Leistungshalbleiterschalter.

Ein solches Submodul jedoch ohne Beschaltungsnetzwerk ist aus der DE 10 2009 057 288 A1 bereits bekannt. Eine ausführliche Darstellung der Funktionsweise eines solchen Doppelmoduls kann daher an dieser Stelle entfallen. Wesentlich ist, dass das Doppelmodul zwei Untereinheiten aufweist, die jeweils als Halbbrücke ausgebildet sind. Die Untereinheiten weisen das gleiche Beschaltungsnetzwerk auf wie das als Halbbrücke ausgebildete erfindungsgemäße Submodul. Die Verbindungsmittel verbinden die so beschalteten Halbleiterbrücken, wobei die Schalteinheit der Verbindungsmittel in Gestalt des Überbrückungszweiges ebenfalls mit einer Beschaltung ausgerüstet ist, die einer Schaltüberspannung entgegenwirkt.

Gemäß der Erfindung weist jeder Entmagnetisierungszweig einen Zweigkondensator auf, wobei der Zweigkondensator dem Beschaltungswiderstand parallel geschaltet ist. Der Zweigkondensator ist so in dem Entmagnetisierungszweig angeordnet, dass er niederinduktiv oder aber über den Energiespeicher mit der Halbleiterreihenschaltung verbunden ist. Somit unterstützt der Zweigkondensator die Spannungsbegrenzung der Leistungshalbleiterschalter der zugeordneten Halbleiterreihenschaltung. Der Zweigkondensator dient zur Aufnahme der Schaltüberspannungen, wobei der parallel geschaltete Beschaltungswiderstand für eine Entladung des Zweigkondensators sorgt.

Erfindungsgemäß weist jeder Entmagnetisierungszweig zwei Beschaltungsdioden auf. Die Beschaltungsdioden sind dabei einer Reihenschaltung von Leistungshalbleiterschaltern zugeordnet. Dabei ist der Potenzialpunkt zwischen den Beschaltungsdioden mit dem Potenzialpunkt zwischen den Leistungshalbleiterschaltern über den Beschaltungskondensator verbunden. Die Beschaltungsdioden sind gleichsinnig zueinander und gleichsinnig parallel zu den Leistungshalbleiterschaltern der Halbleiterschaltung angeordnet, deren Spannung begrenzt werden soll. Aufgrund dieser Verschaltung und Ausrichtung der Beschaltungsdioden ist der Beschaltungskondensator einem der Leistungshalbleiterschalter quasi parallel geschaltet. Es sei darauf hingewiesen, dass die Schaltüberspannung dieses parallel geschalteten Leistungshalbleiterschalters etwas besser begrenzt wird als die des anderen Leistungshalbleiterschalters der gleichen Halbleiterreihenschaltung. Zweckmäßigerweise ist die Verschaltung so gewählt, dass dieser etwas besser geschützte Leistungshalbleiterschalter derjenige Leistungshalbleiterschalter ist, der bei Normalbetrieb thermisch stärker belastet ist.

Wie bereits ausgeführt wurde, ist es vorteilhaft, dass erfindungsgemäß jeder Entmagnetisierungszweig einerseits mit dem Potenzialpunkt zwischen der jeweils zugeordneten Stromanstiegsbegrenzungsdrossel und der Halbleiterreihenschaltung und andererseits niederinduktiv mit einem Pol des jeweiligen Energiespeichers verbunden ist.

Im Rahmen der Erfindung ist es bevorzugt, dass die ein- und abschaltbaren Leistungshalbleiterschalter so genannte "Integrated Gate Commutated Thyristors" IGCTs sind.

An dieser Stelle sei auch darauf hingewiesen, dass statt eines einzigen Leistungshalbleiterschalters auch eine Reihenschaltung von synchron angesteuerten Leistungshalbleiterschaltern im Rahmen der Erfindung eingesetzt werden kann. Einer Halbleiterreihenschaltung aus zwei Leistungshalbleiterschaltern würde dann eine Halbleiterreihenschaltung aus zwei Reihenschaltungen von beispielsweise jeweils acht Leistungshalbleiterschaltern entsprechen. Jede Reihenschaltung von Leistungshalbleiterschaltern würde jedoch aufgrund der synchronen Ansteuerung wie ein einzelner Leistungshalbleiterschalter wirken. Natürlich kann durch eine Reihenschaltung von solchen Leistungshalbleiterschaltern eine größere Spannung geschaltet werden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figuren 1 bis 4: Ersatzschaltbilder unterschiedlicher Ausführungsbeispiele des erfindungsgemäßen Submoduls, das als Halbbrücke ausgebildet ist,
- Figur 5: ein Ersatzschaltbild eines als Vollbrücke ausgebildeten Ausführungsbeispiels eines nicht beanspruchten Submoduls,
- Figur 6: ein Ersatzschaltbild eines als Doppelmodul ausgebildeten Ausführungsbeispiels eines nicht beanspruchten Submoduls und
- Figur 7: eine weitere Variante eines als Doppelmodul ausgebildeten Ausführungsbeispiels eines nicht beanspruchten Submoduls zeigen.

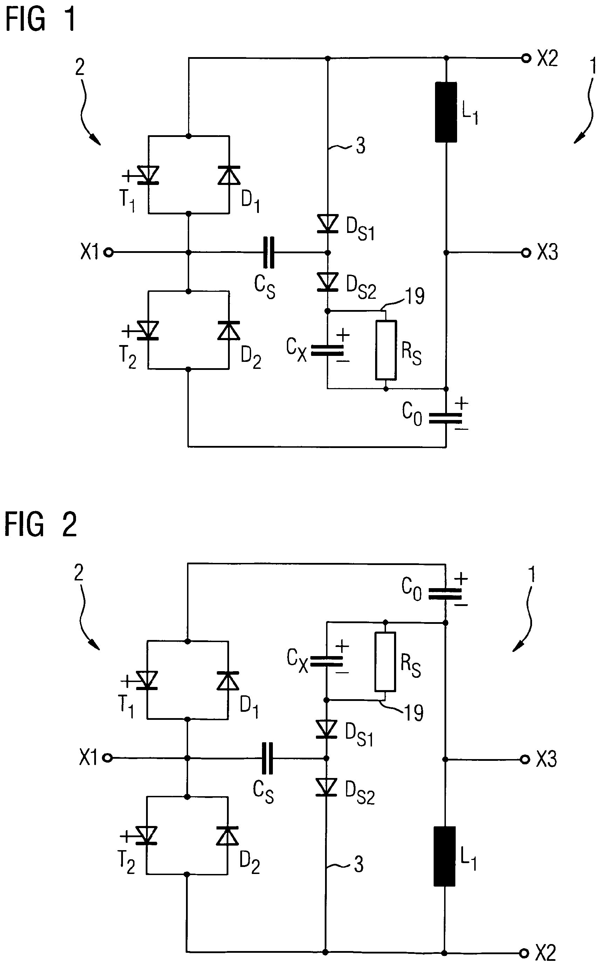

Figur 1 zeigt ein Ersatzschaltbild eines Ausführungsbeispiels eines erfindungsgemäßen Submoduls 1, das als Halbbrücke ausgebildet ist. Das dort gezeigte Submodul 1 weist einen Energiespeicher in Gestalt eines Speicherkondensators C₀ auf, dem eine Halbleiterreihenschaltung 2 aus zwei ein- und abschaltbaren Leistungshalbleiterschaltern T₁ und T₂ parallel geschaltet ist. Bei den ein- und abschaltbaren Leistungshalbleiterschaltern T₁ und T₂ handelt es sich um so genannte "Integrated Commutated Thyristors" oder IGCTs, denen jeweils eine Freilaufdiode D₁ beziehungsweise D₂ gegensinnig parallel geschaltet ist. Der Potenzialpunkt zwischen den ein- und abschaltbaren Leistungshalbleiterschaltern T₁ und T₂ ist mit einer ersten Anschlussklemme X1 verbunden. Zur Vermeidung eines zu steilen Stromanstiegs oder -abfalls ist die Halbleiterreihenschaltung 2 über eine Stromanstiegsbegrenzungsdrossel L₁ mit dem Energiespeicher C₀ verbunden. Ferner ist eine zweite Anschlussklemme X2 vorgesehen, die mit dem Potenzialpunkt zwischen der Stromanstiegsbegrenzungsdrossel L₁ und der Halbleiterreihenschaltung 2 verbunden ist. Mit X3 ist eine weitere Anbindungsmöglichkeit der zweiten Anschlussklemme angedeutet, auf die später eingegangen werden wird. Die Stromanstiegsbegrenzungsdrossel L1 ist durch einen Entmagnetisierungszweig 3 überbrückt, in dem zwei Beschaltungsdioden D_{S1} und D_{S2} gleichsinnig zueinander angeordnet sind. Der Entmagnetisierungszweig 3 verfügt ferner über einen Zweigkondensator Cx sowie über einen Beschaltungswiderstand R_{S}, der dem Zweigkondensator Cx parallel geschaltet ist. Der Beschaltungswiderstand ist in einem Überbrückungszweig 19 angeordnet. Der Entmagnetisierungszweig 3 ist einmal mit dem Potenzialpunkt zwischen dem Leistungshalbleiter T₂ der Halbleiterreihenschaltung 2 und der Stromanstiegsbegrenzungsdrossel L₁ sowie andererseits mit dem Potenzialpunkt zwischen dem positiven Pol des Speicherkondensators C₀ und der Stromanstiegsbegrenzungsdrossel L₁ verbunden. Auf diese Art und Weise wird durch den Entmagnetisierungszweig 3 und dem von ihm überbrückten Abschnitt des Gleichspannungszweiges des Submoduls 1 eine Masche ausgebildet, in welcher ein von der Stromanstiegsbegrenzungsdrossel L₁ getriebener Strom fließen kann, wobei der Beschaltungswiderstand R_{S} die in der Stromanstiegsbegrenzungsdrossel L₁ gespeicherten Energie in thermische Energie umwandelt. Die besagte Masche weist eine innere Masche auf, die aus dem Überbrückungszweig 19 sowie dem von ihm überbrückten Abschnitt des Entmagnetisierungszweiges 3 gebildet ist. Beide Maschen werden von dem Entmagnetisierungszweig 3 mit ausgebildet.

Der Potenzialpunkt zwischen den Beschaltungsdioden D_{S1} und D_{S2} ist über einen Beschaltungskondensator C_{S} mit dem Potenzialpunkt zwischen den Leistungshalbleiterschaltern T₁ und T₂ verbunden. Der Beschaltungskondensator C_{S} dient somit zur Überspannungsbegrenzung der IGCTs T₁ und T₂. Dabei weisen die Beschaltungsdioden D_{S1} und D_{S2} die gleiche Durchgangsrichtung auf, wie die ihnen zugeordneten IGCTs. Der Beschaltungskondensator C_{S} ist aufgrund der Orientierung der Beschaltungsdioden D_{S1} und D_{S2} dem zwischen den Anschlussklemmen X1 und X2 angeordneten IGCT T₁ quasi parallel geschaltet. Diese Parallelschaltung bewirkt, dass der IGCT T₁ etwas besser gegenüber Überspannungen geschützt ist als der IGCT T₂. Der IGCT T₂ ist durch die Reihenschaltung aus Speicherkondensator Co, den Zweigkondensator Cx sowie den Beschaltungskondensator C_{S} geschützt. Diese geringfügig bessere Spannungsbegrenzung des zwischen den Anschlussklemmen X1 und X2 angeordneten Leistungshalbleiterschalters ist erfindungsgemäß zweckmäßig, da der zwischen den besagten Anschlussklemmen angeordnete Leistungshalbleiterschalter T₁ neben Wechselstromanteilen auch Gleichstromanteile beziehungsweise bei Anwendungen in der Antriebstechnik den Laststrom führen muss. T₁ ist daher thermisch stärker belastet als T₂.

Ist die zweite Anschlussklemme X2, wie in Figur 1 angedeutet, zwischen Stromanstiegsbegrenzungsdrossel L₁ und Halbleiterreihenschaltung 2 angeordnet, muss die Stromanstiegsbegrenzungsdrossel nicht den Laststrom beziehungsweise Gleichstromanteil führen und kann somit kompakter ausgelegt werden. Im Rahmen der Erfindung ist es jedoch durchaus auch möglich, die zweite Anschlussklemme an die Stelle X3, also an den Potenzialpunkt zwischen Stromanstiegsbegrenzungsdrossel L₁ und Speicherkondensator C₀ zu legen. In diesem Falle muss sie jedoch auch den Last- beziehungsweise Gleichstromanteile führen und entsprechend größer dimensioniert werden. Auch ist eine Mittenanzapfung der Spule durch die zweite Anschlussklemme X2 vorstellbar.

Figur 2 zeigt ein von Figur 1 etwas abweichendes Ausführungsbeispiel einer Halbbrücke gemäß der Erfindung, die sich von dem in Figur 1 gezeigten Ausführungsbeispiel darin unterscheidet, dass die zweite Anschlussklemme X2 nicht mehr mit dem positiven Pol des Speicherkondensators Co, sondern mit dessen negativem Pol verbunden ist. Die zu Figur 1 gemachten Ausführungen gelten jedoch uneingeschränkt auch für die Ausgestaltung des Submoduls 1 gemäß Figur 2.

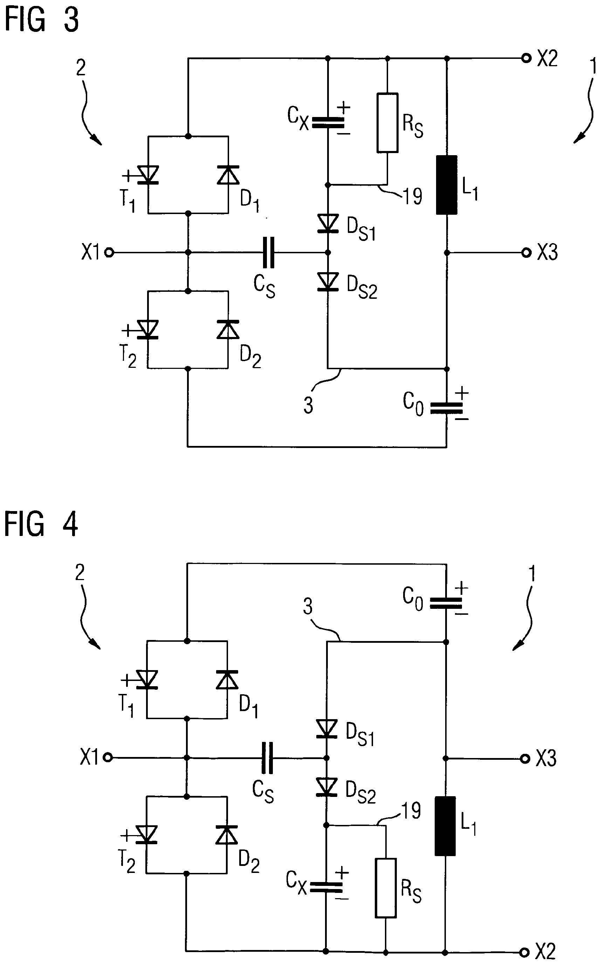

Figur 3 zeigt ein weiteres Ausführungsbeispiel des erfindungsgemäßen Submoduls 1, das dem in Figur 1 gezeigten Submodul weitestgehend entspricht, wobei jedoch der Zweigkondensator Cx in Flussrichtung des über den zum Entmagnetisierungszweig 3 fließenden Stromes, den Beschaltungsdioden D_{S1} und D_{S2} nachgeschaltet ist. In dem Ausführungsbeispiel des erfindungsgemäßen Submoduls 1 gemäß Figur 3 ist der Zweigkondensator Cx jedoch in der besagten Stromflussrichtung den Beschaltungsdioden D_{S1} und D_{S2} vorgeschaltet. Entsprechendes gilt für den dem Zweigkondensator Cx parallel geschalteten Beschaltungswiderstand R_{S}. Diese unterschiedliche Anordnung der Komponenten im Entmagnetisierungszweig 3 ändert jedoch nicht an dessen Wirkung und Eigenschaften.

Es sei an dieser Stelle ausgeführt, dass die durch den Entmagnetisierungszweig 3 und den von ihm überbrückten Abschnitt der Verschienung des Submoduls 1 gebildete Masche bei allen Ausführungsbeispielen der Erfindung lediglich einen äußeren Knoten oder mit anderen Worten nur einen Verzweigungspunkt aufweist, durch den der Entmagnetisierungszweig 3 über den Beschaltungskondensator C_{S} mit dem Potenzialpunkt zwischen den zwei Leistungshalbleiterschaltern der dem Entmagnetisierungszweig 3 zugeordneten Halbleiterreihenschaltung verbunden ist. Weitere äußere Knoten oder Verzweigungspunkte sind nicht vorgesehen. Im Rahmen der Erfindung sind mit Ausnahme des Beschaltungskondensators C_{S} alle Beschaltungsbauteile im Entmagnetisierungszweig selbst oder jedenfalls in einer Masche angeordnet, in der ein Stromfluss zumindest abschnittsweise über den Entmagnetisierungszweig führt. Parallel zum Speicherkondensator C₀ angeordnete Beschaltungskondensatoren entfallen daher im Rahmen der Erfindung. Die Komponenten des Beschaltungsnetzwerks können entsprechend kompakt ausgestaltet sein mit geringen Kosten im Gefolge. Durch die kompakte Ausgestaltung sind auch die vom Beschaltungsnetzwerk verursachten Verluste herabgesetzt, wobei das Beschaltungsnetzwerk den Einsatz von Leistungshalbleiterschaltern, wie beispielsweise IGCTs, mit Freilaufdioden, ermöglicht, wobei deren dynamische Verluste herabgesetzt sind.

Das Ausführungsbeispiel gemäß Figur 4 entspricht weitestgehend dem Ausführungsbeispiel des erfindungsgemäßen Submoduls 1 gemäß Figur 2, wobei jedoch auch hier die Reihenfolge in Stromflussrichtung gesehen zwischen Beschaltungsdioden Dsi, D_{S2} sowie Zweigkondensator Cx vertauscht worden ist. Während gemäß dem Ausführungsbeispiel gemäß Figur 2 der Zweigkondensator Cx in Stromflussrichtung durch den Entmagnetisierungszweig den Beschaltungsdioden D_{S1} und D_{S2} vorgeschaltet ist, ist er bei dem Ausführungsbeispiel gemäß Figur 4 in Stromflussrichtung hinter den Beschaltungsdioden D_{S1} und D_{S2} angeordnet. Unterschiede in der Wirkungsweise ergeben sich jedoch dadurch nicht.

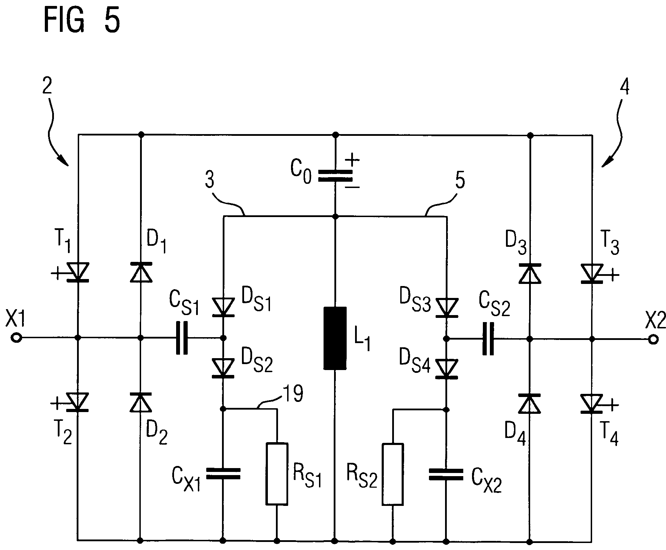

Figur 5 zeigt ein weiteres Ausführungsbeispiel des Submoduls 1, das als Vollbrückenschaltung ausgebildet ist. Das Submodul 1 weist eine erste Reihenschaltung 2 aus IGCTs T₁ und T₂ auf, denen jeweils eine Freilaufdiode D₁ und D₂ gegensinnig parallel geschaltet ist. Der Potenzialpunkt zwischen den besagten IGCTs T₁ und T₂ ist mit der ersten Anschlussklemme X1 verbunden. Ferner ist eine zweite Reihenschaltung 4 aus zwei IGCTs T₃ und T₄ erkennbar, denen ebenfalls jeweils eine Freilaufdiode D₃ und D₄ gegensinnig parallel geschaltet ist. Der Potenzialpunkt zwischen den IGCTs T₃ und T₄ ist mit der zweiten Anschlussklemme X2 verbunden. Jede Halbleiterreihenschaltung 2 beziehungsweise 4 ist einem Speicherkondensator C₀ als Energiespeicher parallel geschaltet. An den Anschlussklemmen X1, X2 können nun je nach Ansteuerung der Leistungshalbleiterschalter T₁, T₂, T₃ oder T₄ die an dem Speicherkondensator C₀ abfallende Kondensatorspannung Uo eine Nullspannung oder aber die inverse Kondensatorspannung -Uo erzeugt werden. Zum Schutz der IGCTs vor zu hoher Stromsteilheit und Überspannung ist wieder ein Beschaltungsnetzwerk vorgesehen, das darüber hinaus die dynamischen Verluste der Leistungshalbleiterschalter herabsetzt. Das Beschaltungsnetzwerk weist hier lediglich eine einzige Strombegrenzungsspule L₁ auf. Die Stromanstiegsbegrenzungsspule L₁ ist wieder von einem ersten Entmagnetisierungszweig 3 überbrückt, in dem die Beschaltungsdioden D_{S1} und D_{S2} in Reihe und mit gleicher Durchlassrichtung angeordnet sind, wobei den Beschaltungsdioden D_{S1} und D_{S2} der Zweigkondensator C_{X1} mit parallelem Beschaltungswiderstand R_{S1} in Durchlassrichtung nachgeordnet ist. Der Potenzialpunkt zwischen den Beschaltungsdioden D_{S1} und D_{S2} ist über den ersten Beschaltungskondensator mit dem Potenzialpunkt zwischen den IGCTs T₁ und T₂ der ersten Halbleiterreihenschaltung 2 verbunden.

Ferner ist ein zweiter Entmagnetisierungszweig 5 vorgesehen, der ebenfalls zwei gleichsinnig in Reihe angeordnete Beschaltungsdioden D_{S3} und D_{S4} aufweist, denen ebenfalls wieder ein zweiter Zweigkondensator C_{X2} nachgeordnet ist. Parallel zum Zweigkondensator C_{X2} ist wieder ein Beschaltungswiderstand R_{S2} vorgesehen, der für eine Entladung des Zweigkondensators C_{X2} sorgt und diesem parallel geschaltet ist. Ferner ist ein zweiter Beschaltungskondensator C_{S2} vorgesehen, der wieder den Potenzialpunkt zwischen den Beschaltungsdioden D_{S3} und D_{S4} des zweiten Entmagnetisierungszweigs 5 mit dem Potenzialpunkt zwischen den IGCTs T₃ und T₄ der zweiten Reihenschaltung verbindet. Die Wirkungsweise des in Figur 5 gezeigten Beschaltungsnetzwerks entspricht der Wirkungsweise des Beschaltungsnetzwerks gemäß Figur 1, so dass die Ausführungen, die im Zusammenhang mit Figur 1 gemacht wurden, auch hier gelten, wobei jedoch der erste Beschaltungskondensator C_{S1} und der erste Entmagnetisierungszweig 3 zum Schutz der IGCTs der ersten Halbleiterreihenschaltung 2 vorgesehen sind und der zweite Entmagnetisierungszweig 5 sowie der zweite Beschaltungskondensator C_{S2} zum Schutz der IGCTs T₃ und T₄ und Freilaufdioden D₃ und D₄ der zweiten Reihenschaltung 4 dienen. Da nur eine einzige Stromanstiegsbegrenzungsdrossel L₁ vorgesehen ist, dürfen die Leistungshalbleiterschalter, hier IGCTs, nicht gleichzeitig angesteuert werden, da die Stromanstiegsbegrenzungsdrossel L₁ gegebenenfalls nicht entmagnetisiert und somit wirkungslos sein würde.

Alternativ ist jedoch eine Vollbrückenschaltung mit zwei Stromanstiegsbegrenzungsdrosseln und jeweils überbrückenden Entmagnetisierungszweigen möglich.

Bei einer abweichenden Variante des Submoduls 1 ist der Zweigkondensator C_{X1} und/oder der Zweigkondensator C_{X2} anodenseitig mit der jeweiligen Beschaltungsdiode D_{S1} beziehungsweise D_{S2} verbunden. Entsprechendes gilt für den jeweils zugeordneten Beschaltungswiderstand R_{S1} beziehungsweise R_{S2}.

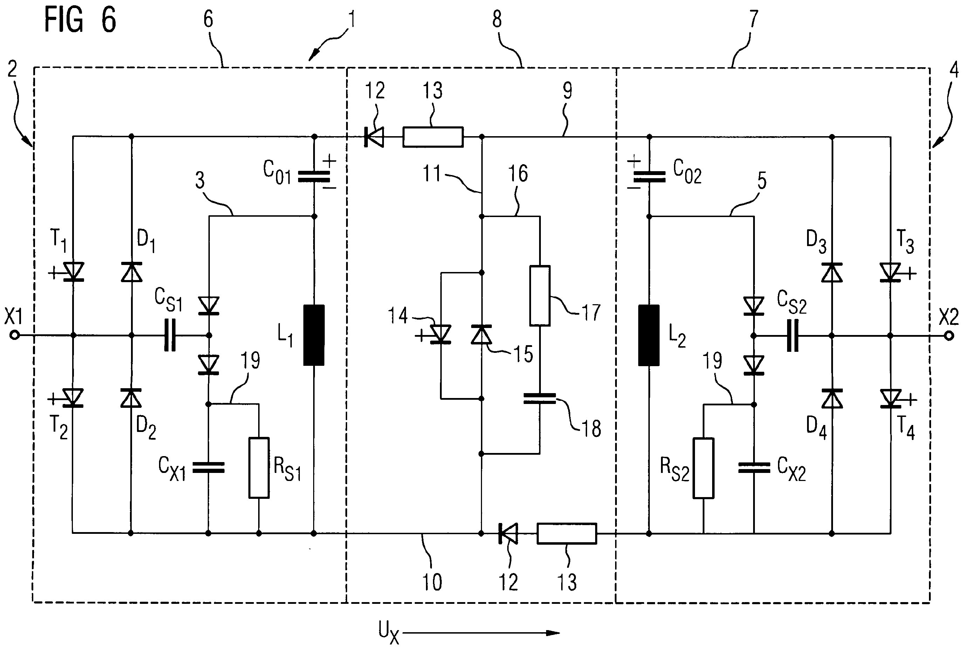

Figur 6 zeigt ein weiteres Ausführungsbeispiel des Submoduls 1, das auch als Doppelmodul bezeichnet werden kann. Ein solches Doppelmodul ist beispielsweise in der DE 10 2009 057 288 A1 mit IGBTs und ohne Beschaltungsnetzwerk offenbart. Das in Figur 6 gezeigte Submodul 1 verfügt über zwei Untereinheiten 6 und 7, deren Aufbau oder Topologie einem Submodul gemäß Figur 4 entsprechen. So weist jede Untereinheit 6 oder 7 eine erste 2 beziehungsweise eine zweite 4 Halbleiterreihenschaltung aus IGCTs T₁, T₂ beziehungsweise T₃ und T₃ auf, wobei jedem IGCT eine gegensinnige Freilaufdiode D₁, D₂, D₃ beziehungsweise D₄ parallel geschaltet ist. Jede Halbleiterreihenschaltung 2 beziehungsweise 4 ist wieder einem ersten beziehungsweise zweiten Speicherkondensator C₀₁ oder C₀₂ parallel geschaltet. Das aus Entmagnetisierungszweig 3 beziehungsweise 5 und Beschaltungskondensator C_{S1} beziehungsweise C_{S2} sowie Stromanstiegsbegrenzungsdrossel L₁ beziehungsweise L₂ gebildete Beschaltungsnetzwerk entspricht in seiner Ausgestaltung und Wirkungsweise den zuvor im Zusammenhang mit den Halbbrücken beschriebenen Ausgestaltungen des Beschaltungsnetzwerks, so dass auf die dort gemachten Ausführungen hier verwiesen werden kann.

Die beiden Untereinheiten 6 und 7 sind über Verbindungsmittel 8 miteinander verknüpft, die eine positive Verbindungsschiene 9, welche die positiv geladenen Pole der Energiespeicher C₀₁ und C₀₂ miteinander verbindet sowie eine negative Verbindungsschiene 10 umfassen, welche die negativ geladenen Pole der Energiespeicher C₀₁ und C₀₂ in Reihe mit den Stromanstiegsbegrenzungsdrosseln L₁ und L₂ miteinander verbindet. Der positive Verbindungszweig 9 ist über einen Mittenzweig 11 mit dem negativen Verbindungszweig 10 verbunden. Im positiven Verbindungszweig 9 sind eine Potenzialtrennungsdiode 12 sowie ein Dämpfungswiderstand 13 angeordnet. Auch im negativen Verbindungszweig 10 sind eine Begrenzungsdiode 12 sowie ein Dämpfungswiderstand 13 vorgesehen. Der Abzweig zum Mittenzweig 11 ist in Richtung des Stromflusses im positiven Verbindungszweig 9 der Potenzialtrennungsdiode 12 vorgelagert, wohingegen der Abzweig zum Mittenzweig 11 im negativen Verbindungszweig 11 der Potenzialtrennungsdiode 12 nachgeschaltet ist. Im Mittenzweig 11 ist eine Schalteinheit 14 in Gestalt eines weiteren IGCTs 14 vorgesehen, wobei dem besagten IGCT 14 wieder eine Freilaufdiode 15 gegensinnig parallel geschaltet ist. Das Beschaltungsnetzwerk umfasst hier einen Überbrückungszweig 16, mit dem der IGCT 14 überbrückt ist. Im Überbrückungszweig 16 sind ein Beschaltungswiderstand 17 sowie ein dritter Beschaltungskondensator 18 angeordnet.

Zur Wirkungsweise des Doppelmoduls sei auf die bereits genannte DE 10 2009 057 288 A1 verwiesen. Zwischen den Anschlussklemmen X1 und X2 kann die an die an dem Speicherkondensator C₀₁ abfallende Spannung, die an dem Speicherkondensator C₀₂ abfallende Spannung oder eine Nullspannung oder aber die Summe aus den Spannungen C₀₁ und C₀₂ erzeugt werden. Somit können mittels des Doppelmoduls alle Spannungen bereitgestellt werden, die durch zwei in Reihe geschaltete einzelne Halbbrückensubmodule erzeugt werden können. Das Doppelmodul hat jedoch den Vorteil, dass keine unkontrollierten Gleichströme zwischen der ersten und der zweiten Anschlussklemme X1 und X2 fließen können, sobald die Schalteinheit 14 abgeschaltet ist.

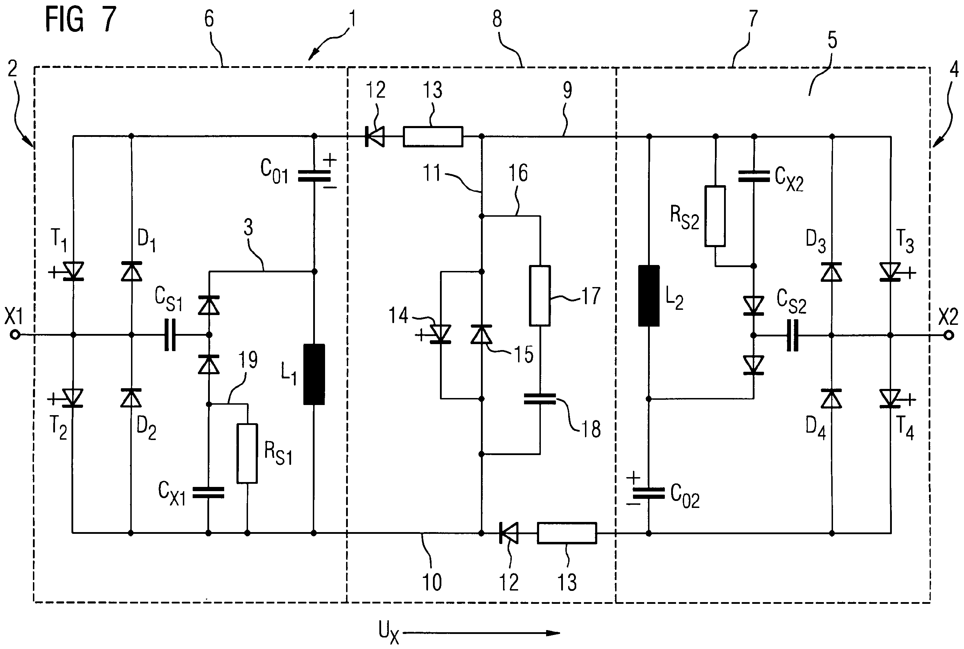

Figur 7 zeigt das Ersatzschaltbild eines weiteren Ausführungsbeispiels, das ebenfalls als Doppelmodul ausgebildet ist. Das in Figur 7 gezeigte Doppelmodul unterscheidet von dem in Figur 6 gezeigten Ausführungsbeispiel hinsichtlich Anordnung des Speicherkondensators C₀₂ und der Stromanstiegsbegrenzungsdrosseln L₂ sowie des diese überbrückenden Entmagnetisierungszweiges 5. Während die Stromanstiegsbegrenzungsdrosseln L₂ in Figur 6 zwischen dem Minuspol des Speicherkondensators C₀₂ und der Kathode von T₄ angeordnet ist, ist die Stromanstiegsbegrenzungsdrosseln L₂ in Figur 7 mit Pluspol des Speicherkondensators C₀₂ und der Anode von T₃ angeordnet. Die Wirkungsweise der Bauteile entspricht jedoch weitestgehend derjenigen des Doppelmoduls gemäß Figur 6, so dass die dort gemachten Ausführungen hier unverändert gelten.

## Patentansprüche

1. Submodul (1) für einen modularen Mehrpunktumrichter mit
- einem Energiespeicher (C₀),
- einer parallel zum Energiespeicher (C₀) geschalteten Halbleiterreihenschaltung (2) aus zwei ein- und abschaltbaren Leistungshalbleiterschaltern (T₁,T₂), denen jeweils eine Freilaufdiode (D₁,D₂) gegensinnig parallel geschaltet ist,
- einer ersten Anschlussklemme (X1), die mit dem Potenzialpunkt zwischen den Leistungshalbleiterschaltern (T₁,T₂) verbunden ist,
- einer zweiten Anschlussklemme (X2) und
- einem Beschaltungsnetzwerk, das eine Stromanstiegsbegrenzungsdrossel (L₁) und einen diese überbrückenden Entmagnetisierungszweig (3) aufweist, in dem zwei in Reihe angeordnete gleichsinnige Beschaltungsdioden (D_{S1},D_{S2}) und ein Beschaltungswiderstand (R_{S}) in Reihe angeordnet sind,
- wobei die Halbleiterreihenschaltung (2) über die Stromanstiegsbegrenzungsdrossel (L₁) mit dem Energiespeicher (C₀) verbunden ist,
- wobei der Potenzialpunkt zwischen den Beschaltungsdioden (D_{S1},D_{S2}) über einen Beschaltungskondensator (C_{S}) mit dem Potentialpunkt zwischen den Leistungshalbleiterschaltern (T₁,T₂) verbunden ist, und
- wobei das Beschaltungsnetzwerk keine weiteren Beschaltungsbauteile aufweist oder jedes weitere Beschaltungsbauteil des Beschaltungsnetzwerks in einer Masche angeordnet ist, die teilweise aus dem Entmagnetisierungszweig (3) oder Abschnitten von diesem gebildet ist,
- der Entmagnetisierungszweig (3) einerseits mit dem Potentialpunkt zwischen der jeweils zugeordneten Stromanstiegsbegrenzungsdrossel (L1,L2) und der Halbleiterreihenschaltung (2,4) und andererseits niederinduktiv mit einem Pol des jeweiligen Energiespeichers (C0) verbunden ist, und
- die zweite Anschlussklemme (X2) mit dem Potentialpunkt zwischen der Stromanstiegsbegrenzungsdrossel (L1) und der Halbleiterreihenschaltung (2), mit dem Potentialpunkt zwischen der Stromanstiegsbegrenzungsdrossel (L₁) und dem Energiespeieher (C₀) oder mit einer Mittenanzapfung der Stromanstiegsbegrenzungsdrossel (L₁) verbunden ist,
**dadurch gekennzeichnet, dass**
- der Entmagnetisierungszweig (3) einen Zweigkondensator (C_{X1},C_{X2}) aufweist, wobei der Zweigkondensator (C_{X1},C_{X2}) dem Beschaltungswiderstand (R_{S1},R_{S2}) parallel geschaltet ist.

2. Submodul (1) nach Anspruch 1,
**dadurch gekennzeichnet, dass** das Submodul (1) eine Halbrückenschaltung ausbildet.

3. Submodul (1) nach Anspruch 1,
**dadurch gekennzeichnet, dass** das Submodul (1) eine Vollbrückenschaltung ausbildet, die eine parallel zu dem Energiespeicher (C₀) angeordnete zweite Halbleiterreihenschaltung (4) aus zwei ein- und abschaltbaren Leistungshalbleiterschaltern (T₃,T₄), denen jeweils eine Freilaufdiode (D₃,D₄) gegensinnig parallel geschaltet ist, wobei die zweite Anschlussklemme (X2) mit dem Potenzialpunkt zwischen den Leistungshalbleiterschaltern (T₃,T₄) der zweiten Halbleiterreihenschaltung (4) verbunden ist, wobei die oder eine zweite Stromanstiegsbegrenzungsdrossel (L₁) von einem zweiten Entmagnetisierungszweig (5) überbrückt ist, in dem zwei in Reihe angeordnete gleichsinnige Beschaltungsdioden (D_{S3},D_{S4}) und ein Beschaltungswiderstand (R_{S2}) angeordnet sind, wobei der Potenzialpunkt zwischen den Beschaltungsdioden (D_{S3},D_{S4}) des zweiten Entmagnetisierungszweigs (5) über einen zweiten Beschaltungskondensator (C_{S2}) mit dem Potentialpunkt zwischen den Leistungshalbleiterschaltern (T₃,T₄) der zweiten Halbleiterreihenschaltung (4) verbunden ist.

4. Submodul (1) nach Anspruch 1,
**gekennzeichnet durch**,
- eine erste Untereinheit (6), die den besagten ersten Energiespeicher (C₀₁), die besagte parallel zu diesem angeordnete erste Halbleiterschaltung (2), die besagte erste Anschlussklemme (X1), die besagte erste Stromanstiegsbegrenzungsdrossel (L₁), den besagten ersten Entmagnetisierungszweig (3) und den besagten ersten Beschaltungskondensator (C_{S1}) umfasst,
- eine zweite Untereinheit (7), die einen zweiten Energiespeicher (C₀₂), eine parallel zu diesem angeordneten zweite Halbleiterreihenschaltung (4) aus zwei ein- und abschaltbaren Leistungshalbleiterschaltern (T₃,T₄), denen jeweils eine Freilaufdiode (D₃,D₄) gegensinnig parallel geschaltet ist, wobei die zweite Anschlussklemme (X2) mit dem Potentialpunkt zwischen den Leistungshalbleiterschaltern (T₃,T₄) der zweiten Halbleiterreihenschaltung (4) verbunden ist,
- eine zweite Stromanstiegsbegrenzungsdrossel (L₂) und
- einen zweiten die zweite Stromanstiegsbegrenzungsdrossel (L₂) überbrückenden Entmagnetisierungszweig (5) umfasst, in dem zwei in Reihe angeordnete gleichsinnige Beschaltungsdioden (D_{S3},D_{S4}) und ein Beschaltungswiderstand (R_{S2}) angeordnet sind,
- wobei jede Halbleiterreihenschaltung (2,4) über jeweils eine Stromanstiegsbegrenzungsdrossel (L₁,L₂) mit dem jeweils zugeordneten Energiespeicher (C₀₁,C₀₂) verbunden ist und
- wobei der Potenzialpunkt zwischen den Beschaltungsdioden (D_{S3},D_{S4}) des zweiten Entmagnetisierungszweiges (5) über einen zweiten Beschaltungskondensator (C_{X2}) mit dem Potentialpunkt zwischen den Leistungshalbleiterschaltern (T₃,T₄) der zweiten Halbleiterschaltung (4) verbunden ist, und
- Verbindungsmittel (8), welche die erste Untereinheit (6) und die zweite Untereinheit (7) miteinander verbinden, wobei die Verbindungsmittel (8) eine Schalteinheit (14) und Potenzialtrennungsdioden (12) aufweisen.

5. Submodul (1) nach Anspruch 4,
**dadurch gekennzeichnet, dass** die Schalteinheit (14) durch einen Überbrückungszweig (16) überbrückt ist, in dem ein Dämpfungswiderstand (17) angeordnet ist

6. Submodul (1) nach Anspruch 5,
**dadurch gekennzeichnet, dass** jeder Überbrückungszweig (16) einen dritten Beschaltungskondensator (18) aufweist.

7. Submodul (1) nach Anspruch 5 oder 6,
**dadurch gekennzeichnet, dass** der Überbrückungszweig (16) über eine Beschaltungsdiode verfügt.

8. Submodul (1) nach einem der Ansprüche 4 bis 7,
**dadurch gekennzeichnet, dass** die Schalteinheit einen ein- und abschaltbaren Leistungshalbleiterschalter (14) aufweist.

9. Submodul (1) nach einem der vorhergehenden Ansprüche,
**dadurch gekennzeichnet, dass** die ein- und abschaltbaren Leistungshalbleiterschalter (T₁, T₂, T₃, T₄) IGC-Thyristoren sind.

## Claims

1. Submodule (1) for a modular multilevel converter having
- an energy store (C₀),
- a semiconductor series circuit (2), which is connected in parallel with the energy store (C₀) and is composed of two power semiconductor switches (T₁, T₂), which can be switched on and off and with each of which a freewheeling diode (D₁, D₂) is connected in parallel in the opposite direction,
- a first connection terminal (X1), which is connected to the potential point between the power semiconductor switches (T₁, T₂),
- a second connection terminal (X2), and
- a snubber network, which has a current rise limiting inductor (L₁) and a demagnetization branch (3), which bypasses said current rise limiting inductor and in which two snubber diodes (D_{S1}, D_{S2}) arranged in series in the same direction and a snubber resistor (R_{S}) are arranged in series,
- wherein the semiconductor series circuit (2) is connected to the energy store (C₀) via the current rise limiting inductor (L₁),
- wherein the potential point between the snubber diodes (D_{S1}, D_{S2}) is connected to the potential point between the power semiconductor switches (T₁, T₂) via a snubber capacitor (C_{S}), and
- wherein the snubber network does not have any other snubber components, or any other snubber component of the snubber network is arranged in a mesh that is partially formed by the demagnetization branch (3) or sections thereof,
- the demagnetization branch (3) is connected both to the potential point between the respectively associated current rise limiting inductor (L1, L2) and the semiconductor series circuit (2, 4) and, with low inductance, to a pole of the respective energy store (C0), and
- the second connection terminal (X2) is connected to the potential point between the current rise limiting inductor (L1) and the semiconductor series circuit (2), to the potential point between the current rise limiting inductor (L₁) and the energy store (C₀) or to a centre tap of the current rise limiting inductor (L₁),
**characterized in that**
- the demagnetization branch (3) has a branch capacitor (C_{X1}, C_{X2}), wherein the branch capacitor (C_{X1}, C_{X2}) is connected in parallel with the snubber resistor (R_{S1}, R_{S2}).

2. Submodule (1) according to Claim 1,
**characterized in that**
the submodule (1) forms a half-bridge circuit.

3. Submodule (1) according to Claim 1,
**characterized in that**
the submodule (1) forms a full-bridge circuit, which has a second semiconductor series circuit (4), which is arranged in parallel with the energy store (C₀) and is composed of two power semiconductor switches (T₃, T₄), which can be switched on and off and with each of which a freewheeling diode (D₃, D₄) is connected in parallel in the opposite direction, wherein the second connection terminal (X2) is connected to the potential point between the power semiconductor switches (T₃, T₄) of the second semiconductor series circuit (4), wherein the or a second current rise limiting inductor (L₁) is bypassed by a second demagnetization branch (5), in which two snubber diodes (D_{S3}, D_{S4}) arranged in series in the same direction and a snubber resistor (R_{S2}) are arranged, wherein the potential point between the snubber diodes (D_{S3}, D_{S4}) of the second demagnetization branch (5) is connected to the potential point between the power semiconductor switches (T₃, T₄) of the second semiconductor series circuit (4) via a second snubber capacitor (Cs2) .

4. Submodule (1) according to Claim 1,
**characterized by**
- a first subunit (6), which comprises said first energy store (C₀₁), said first semiconductor circuit (2), which is arranged in parallel with said first energy store, said first connection terminal (X1), said first current rise limiting inductor (L₁), said first demagnetization branch (3) and said first snubber capacitor (C_{S1}),
- a second subunit (7), which comprises a second energy store (C₀₂), a second semiconductor series circuit (4), which is arranged in parallel with said second energy store and is composed of two power semiconductor switches (T₃, T₄), which can be switched on and off and with each of which a freewheeling diode (D₃, D₄) is connected in parallel in the opposite direction, wherein the second connection terminal (X2) is connected to the potential point between the power semiconductor switches (T₃, T₄) of the second semiconductor series circuit (4),
a second current rise limiting inductor (L₂), and
a second demagnetization branch (5), which bypasses the second current rise limiting inductor (L₂) and in which two snubber diodes (D_{S3}, D_{S4}) arranged in series in the same direction and a snubber resistor (R_{S2}) are arranged,
- wherein each semiconductor series circuit (2, 4) is connected to the respectively associated energy store (C₀₁, C₀₂) via a respective current rise limiting inductor (L₁, L₂), and
- wherein the potential point between the snubber diodes (D_{S3}, D_{S4}) of the second demagnetization branch (5) is connected to the potential point between the power semiconductor switches (T₃, T₄) of the second semiconductor circuit (4) via a second snubber capacitor (C_{X2}), and
- connecting means (8), which connect the first subunit (6) and the second subunit (7) to one another, wherein the connecting means (8) have a switching unit (14) and potential isolation diodes (12).

5. Submodule (1) according to Claim 4,
**characterized in that**
the switching unit (14) is bypassed by a bypass branch (16), in which a damping resistor (17) is arranged.

6. Submodule (1) according to Claim 5,
**characterized in that**
each bypass branch (16) has a third snubber capacitor (18).

7. Submodule (1) according to Claim 5 or 6,
**characterized in that**
the bypass branch (16) has a snubber diode.

8. Submodule (1) according to one of Claims 4 to 7,
**characterized in that**
the switching unit has a power semiconductor switch (14), which can be switched on and off.

9. Submodule (1) according to one of the preceding claims, **characterized in that**
the power semiconductor switches (T₁, T₂, T₃, T₄) which can be switched on and off are integrated gate-commutated thyristors.

## Revendications

1. Sous-module (1) d'un convertisseur modulaire à plusieurs points comprenant
- un accumulateur (C₀) d'énergie,
- un circuit (2) série à semi-conducteur qui est monté en parallèle à l'accumulateur (C₀) d'énergie et qui est composé de deux interrupteurs (T₁, T₂) à semi-conducteur de puissance pouvant être fermés et ouverts, avec lesquels respectivement une diode (D₁, D₂) de roue libre est montée en parallèle en sens contraire,
- une première borne (X1) de connexion, qui est reliée au point de potentiel entre les interrupteurs (T₁, T₂) à semi-conducteur de puissance,
- une deuxième borne (X2) de connexion et
- un réseau de câblage, qui a une bobine (L₁) de limitation de la montée du courant et une branche (3) de démagnétisation, qui la shunte, et dans lequel sont montées en série deux diodes (D_{S1}, D_{S2}) de câblage de même sens montées en série et une résistance (R_{S}) de câblage,
- dans lequel le circuit (2) série à semi-conducteur est relié à l'accumulateur (C₀) d'énergie par la bobine (L₁) de limitation de l'augmentation de courant,
- dans lequel le point de potentiel entre les diodes (D_{S1}, D_{S2}) de câblage est relié par un condensateur (C_{S}) de câblage au point de potentiel entre les interrupteurs (T₁, T₂) à semi-conducteur de puissance, et
- dans lequel le réseau de câblage n'a pas d'autre composant de câblage ou chaque autre composant de câblage du réseau de câblage est disposé en une maille qui est formée en partie de la branche (3) de démagnétisation ou de tronçon de celle-ci,
- la branche (3) de démagnétisation est reliée d'une part au point de potentiel entre la bobine (L1, L2) de limitation de l'augmentation de courant respectivement associée et le circuit (2, 4) série à semi-conducteur et d'autre part, à basse induction, à un pôle de l'accumulateur (C₀) d'énergie respectif, et
- la deuxième borne (X2) de connexion est reliée au point de potentiel entre la bobine (L1) de limitation de l'augmentation de courant et le circuit (2) série à semi-conducteur, au point de potentiel entre la bobine (L₁) de limitation de l'augmentation de courant et l'accumulateur (C₀) d'énergie ou à une prise médiane de la bobine (L₁) de limitation de l'augmentation de courant, **caractérisé en ce que**
- la branche de démagnétisation a un condensateur (C_{X1}, C_{X2}) de branche, le condensateur (C_{X1}, C_{X2}) de branche étant monté en parallèle avec la résistance (R_{S1}, R_{S2}) de câblage.

2. Sous-module (1) suivant la revendication 1,
**caractérisé en ce que**
le sous-module (1) constitue un circuit à demi-pont.

3. Sous-module (1) suivant la revendication 1,
**caractérisé en ce que**
le sous-module (1) constitue un circuit à pont complet, qui a un deuxième circuit (4) série à semi-conducteur monté en parallèle à l'accumulateur (C₀) d'énergie et composé de deux interrupteurs (T₃, T₄) à semi-conducteur de puissance pouvant être fermés et ouverts avec lesquels respectivement une diode (D₃, D₄) de roue libre est montée en parallèle en sens contraire, dans lequel la deuxième borne (X2) de connexion est reliée au point de potentiel entre les interrupteurs (T₃, T₄) à semi-conducteur de puissance du deuxième circuit (4) série à semi-conducteur, dans lequel la ou une deuxième bobine (L₁) de limitation de l'augmentation de courant est shuntée par une deuxième branche (5) de démagnétisation, dans laquelle sont montées deux diodes (D₃, D₄) de câblage de même sens montées en série et une résistance (R_{S2}) de câblage, dans lequel le point de potentiel entre les diodes (D₃, D₄) de câblage de la deuxième branche (5) de démagnétisation est relié par un deuxième condensateur (C_{S2}) de câblage au point de potentiel entre les interrupteurs (T₃, T₄) à semi-conducteur de puissance du deuxième circuit (4) à semi-conducteur.

4. Sous-module (1) suivant la revendication 1,
**caractérisé par**
- une première sous-unité (3), qui comprend ledit premier accumulateur (C_{O1}) d'énergie, ledit premier circuit (2) à semi-conducteur monté en parallèle avec celui-ci, ladite première borne (X1) de connexion, ladite première bobine (L₁) de limitation de l'augmentation de courant, ladite première branche (3) de démagnétisation et ledit premier condensateur (C_{S1}) de câblage,
- une deuxième sous-unité (7) qui comprend un deuxième accumulateur (C_{O2}) d'énergie, un deuxième circuit (4) à semi-conducteur monté en parallèle avec celui-ci et composé de deux interrupteurs (T₃, T₄) à semi-conducteur de puissance pouvant être fermés et ouverts, avec lesquels respectivement une diode (D₃, D₄) de roue libre est montée en parallèle en sens contraire, dans lequel la deuxième borne (X2) de connexion est reliée au point de potentiel entre les interrupteurs (T₃, T₄) à semi-conducteur de puissance et le deuxième circuit (4) série à semi-conducteur,
- une deuxième bobine (L₂) de limitation de l'augmentation de courant, et
- une deuxième branche (5) de démagnétisation, qui shunte la deuxième bobine (L₂) de limitation de l'augmentation de courant et dans laquelle sont montées deux diodes (D_{S3}, D_{S4}) de câblage de même sens montées en série et une résistance (R_{S2}) de câblage,
- dans lequel chaque circuit (2, 4) série à semi-conducteur est relié par respectivement une bobine (L₁, L₂) de limitation de l'augmentation de courant à l'accumulateur (C_{O1}, C_{O2}) d'énergie associé respectivement, et
- dans lequel le point de potentiel entre les diodes (D_{S3}, D_{S4}) de câblage de la deuxième branche de démagnétisation est relié par un deuxième condensateur (C_{X2}) de câblage au point de potentiel entre les interrupteurs (T₃, T₄) à semi-conducteur de puissance du deuxième circuit (4) à semi-conducteur, et
- des moyens (8) de liaison, qui relient entre elles la première sous-unité (6) et la deuxième sous-unité (7), les moyens (8) de liaison ayant une unité (14) de coupure et des diodes (12) de séparation de potentiel.

5. Sous-module (1) suivant la revendication 4,
**caractérisé en ce que**
l'unité (14) de coupure est shuntée par une branche (16) de shuntage dans laquelle est montée une résistance (17) d'amortissement.

6. Sous-module (1) suivant la revendication 5,
**caractérisé en ce que**
chaque branche (16) de shuntage a un troisième condensateur (18) de câblage.

7. Sous-module (1) suivant la revendication 5 ou 6,
**caractérisé en ce que**
la branche (16) de shuntage dispose d'une diode de shuntage.

8. Sous-module (1) suivant l'une des revendications 4 à 7, **caractérisé en ce que**
l'unité de coupure a un interrupteur (14) à semi-conducteur de puissance pouvant être fermée et ouvert.

9. Sous-module (1) suivant l'une des revendications précédentes, **caractérisé en ce que**
les interrupteurs (T₁, T₂, T₃, T₄) à semi-conducteur de puissance pouvant être fermés et ouverts sont des thyristors IGC.
